# EUROPEAN PATENT SPECIFICATION

(11) **EP 3 048 532 B1**
(45) Date of publication and mention of the grant of the patent: **10.10.2018**
(21) Application number: 15157238.5
(22) Date of filing: 02.03.2015
(51) Int. Cl.: G06F 11/30, G06F 9/455, G06F 11/14, G06F 11/20

(54) **MONITORING SUPPORT SYSTEM, MONITORING SUPPORT METHOD, AND MONITORING SUPPORT PROGRAM**
ÜBERWACHUNGSUNTERSTÜTZUNGSSYSTEM, ÜBERWACHUNGSUNTERSTÜTZUNGSVERFAHREN UND ÜBERWACHUNGSUNTERSTÜTZUNGSPROGRAMM
SYSTÈME, PROCÉDÉ ET PROGRAMME DE SUPPORT DE SURVEILLANCE

(30) Priority: 26.12.2014 JP 2014265707
(43) Date of publication of application: 27.07.2016
(73) Proprietor: Hitachi, Ltd., Tokyo 100-8280 (JP)
(72) Inventor: Kuranami, Koichi, Chiyoda-ku, Tokyo 100-8280 (JP); Taguchi, Yuichi, Chiyoda-ku, Tokyo 100-8280 (JP); Fujii, Kuniyasu, Chiyoda-ku, Tokyo 100-8280 (JP); Tamura, Kenji, Chiyoda-ku, Tokyo 100-8280 (JP)
(74) Representative: Moore, Graeme Patrick

(56) References cited:
- EP-A1- 2 631 796
- EP-A1- 2 796 996
- US-A1- 2014 143 773
- US-B1- 8 175 863

## Description

### BACKGROUND

The present invention relates to a monitoring support system, a monitoring support method, and a monitoring support program for migration of IT resources such as a virtual server.

With the expansion of cloud computing in recent years, the use of cloud computing in data centers has been extended. In the data center using cloud computing, the cloud operator virtualizes an information processing system including server, storage, network, and the like, to build a virtual platform. Then, the cloud operator builds multiple enterprise systems on the virtual platform or provides services for building such enterprise systems to the customer. The cloud is advantageous for the customer in that the customer does not need to have the assets of information processing systems and has excellent scalability. Further, the cloud is also advantageous for the cloud operator in that it is possible to abstract the resources and use them effectively. However, the cloud is designed to manage multiple information processing systems of different customers on a single information processing system and the system management is complicated, which is a disadvantage for the cloud operator. Here, an information processing system built on the virtual platform for each customer is called a tenant.

One of the system managements performed by the cloud operator is incident detection and response. Here, failures occurred in a virtual server or virtual platform, which is one of the IT resources, as well as alert messages or other notifications are called events. Of such events, those that can lead to a reduction in the quality of service or an interruption of service are called incidents. First, an event occurred in the virtual platform is detected by a monitoring system present in a data center. The monitoring system determines whether the event occurred is an incident that the cloud operator should resolve. If it is determined that the event is an incident, the monitoring system notifies an incident management system of the occurrence of an incident. The incident management system records and manages the incident from occurrence to recovery. In the incident management system, every incident is recorded about when the incident occurred and what the content of the incident is, as well as how the incident was resolved. When a similar incident occurred, the cloud operator responds to the incident by referring to the incident information recorded in the incident management system.

One technique unique to the virtual platform is virtual server migration. This technique allows a virtual server present on a virtualized physical server to migrate to another physical server. Because of this technique, even if an incident such as a failure or performance reduction occurs in a physical server, it is possible to save to another physical server through virtual server migration during recovery from failure.

With the development of the network technology, it has been possible to connect two data centers located physically distant from each other (for example, a data center located in the Kanto region and a data center located in the Kansai region) by a faster network with less delay. Thus, it is possible to build a tenant across data centers to allow a virtual server to migrate between the different data centers. Then, if the data center located in the Kanto region is not available due to a disaster or emergency, it is possible to continue operations by migrating the virtual server and tenant to the data center in the Kansai region.

However, even if the virtual server migration is technically possible, the monitoring system and the incident management system are still present in each data center. For this reason, if a virtual server is migrated across data centers even in the same tenant, there is a problem in the monitoring management of the virtual server.

More specifically, the monitoring system has the monitoring configuration relating to the physical devices (such as physical server, physical network device, and physical storage device) that form a virtual platform of a data center, as well as the virtual server running on the physical server. However, the monitoring range of the monitoring system is currently separated for each data center, so that the monitoring configuration of the monitoring system present in the other data center is not shared.

It is technically possible that the monitoring system of the migration source data center monitors the virtual server of the migration destination data center. However, in this case, when an event or incident occurred, the event of the virtual server that should be migrated to the other data center is notified to the migration source monitoring system, so that the migration destination monitoring system may not monitor the virtual server.

Further, when the monitoring system periodically collects and stores the performance information of resources of the virtual server, the migration destination monitoring system may not have the performance information before the migration of the virtual server.

Still further, with respect to the past incident information relating to the virtual server, the migration destination incident management system does not have the incident information occurred in the migration source data center. Thus, even if an incident similar to the past incidents occurred in the migration destination, the incident responder may not refer to the incident information before the migration of the virtual server.

As the background of the present art, there is Patent document 1 (Japanese Patent Application Laid-Open No. 2014-123172) as a technique for the monitoring configuration of a virtual server. Patent document 1 discloses a method for automatically configuring monitoring items in a device added to a tenant.

EP 2796996 Cloud Infrastructure Based Management System and Method for Performing Maintenance and Development for Application System discloses a technique for migrating monitoring configuration information from one monitoring system to a second one together with the migration of the corresponding IT resource.

US 8,175,863 Systems and Methods for Analyzing Performance of Virtual Environments.

### SUMMARY

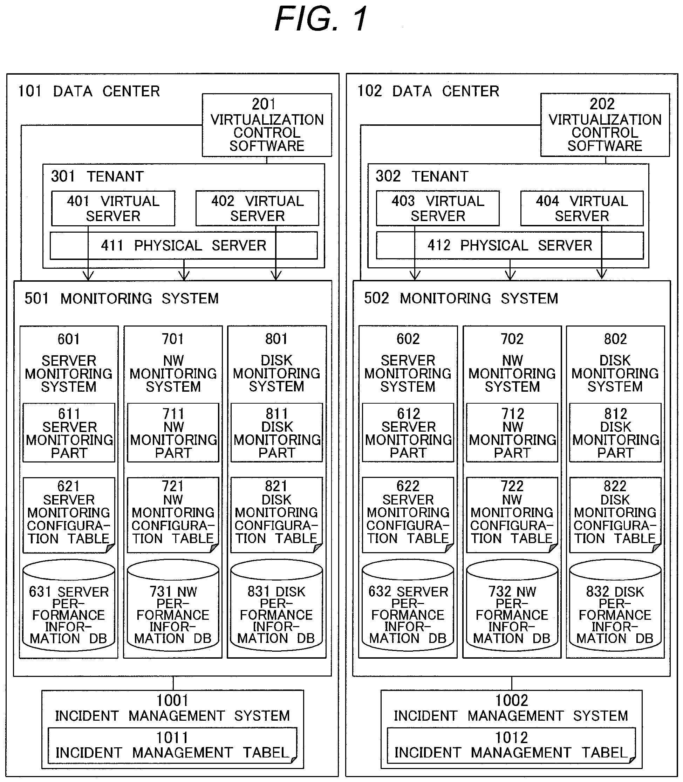

Fig. 1 is a block diagram showing a configuration example of a conventional technique. In the conventional technique, as shown in Fig. 1, a company has multiple data centers (data center 101 and data center 102). Each of tenants (tenant 301 and tenant 302) of a customer is closed in a physical data center, and is present as a separate system from the tenant present in the other data center. Monitoring systems 501 and 502 and incident management systems 1001 and 1002 are present in the data centers, respectively. Each system is intended to manage only events and incidents occurred in the data center of the system.

However, it is difficult for the migration destination monitoring system to properly monitor the virtual server after the virtual server is migrated, because the virtual server can be migrated between the data centers. The cause of this problem is that the monitoring configuration that the monitoring system has is not shared between the migration source and the migration destination after the migration of the virtual server.

In Patent document 1, there is disclosed a method for detecting changes in the device added to the tenant and reflecting the content of the changes on the management database. However, these processes are assumed to be performed in the same data center, under the assumption that the virtual server is monitored by the same monitoring system.

In view of the above, it is desirable to provide a monitoring support system in which the migration destination monitoring system can share the monitoring configuration of an IT resource, such as a virtual server set by the migration source monitoring system, even in the case in which the IT resource such as the virtual server is migrated from the migration source monitoring system to the migration destination monitoring system. It is also desirable to provide a monitoring support method, and a monitoring support program.

Accordingly the present invention provides a monitoring support system as set forth in claim 1.

Further, the present invention can also be viewed as a monitoring support method performed in the monitoring support system, and a monitoring support program as set forth in claims 6, respectively 9.

According to the present invention, even in the case in which an IT resource such as a virtual server is migrated from a migration source monitoring system to a migration destination monitoring system, the migration destination monitoring system can share the monitoring configuration of the IT resource such as the virtual server set by the migration source monitoring system.

### BRIEF DESCRIPTION OF THE DRAWINGS

Fig. 1 is a block diagram showing a configuration example in the art prior to the present invention;
Fig. 2 is a block diagram showing a configuration example in an embodiment of the present invention;
Fig. 3 is a configuration example of a server monitoring configuration table;
Fig. 4 is a configuration example of a servicer performance information DB;
Fig. 5 is a configuration example of a NW performance information DB;
Fig. 6 is a configuration example of a disk performance information DB;
Fig. 7 is a configuration example of a tenant information DB;
Fig. 8 a configuration example of an incident management table;
Fig. 9 is a configuration example of a CPU monitoring configuration table;
Fig. 10 is a configuration example of a memory monitoring configuration table;
Fig. 11 is a configuration example of a process monitoring configuration table;
Fig. 12 is a configuration example of an application monitoring configuration table;
Fig. 13 is a configuration example of a log monitoring configuration table;
Fig. 14 is a configuration example of a network monitoring configuration table;
Fig. 15 is a configuration example of a disk monitoring configuration table;
Fig. 16 is a configuration example of a CPU performance information DB;
Fig. 17 is a configuration example of a memory performance information DB;
Fig. 18 is a configuration example of a network performance information DB;
Fig. 19 is a configuration example of a disk performance information DB;
Fig. 20 is a flow chart showing the flow of the virtual server management table update process in the virtual server migration process;
Fig. 21 is a flow chart showing the flow of the monitoring configuration migration process in the virtual sever migration process;
Fig. 22 is a flow chart showing the flow of the performance information migration process in the virtual server migration process; and
Fig. 23 is a flow chart showing the flow of the incident information sharing process in the virtual server migration process.

### DETAILED DESCRIPTION

Hereinafter, a monitoring configuration support system, method, and program according to the present invention applied to the monitoring configuration support system will be described with reference to the accompanying drawings.

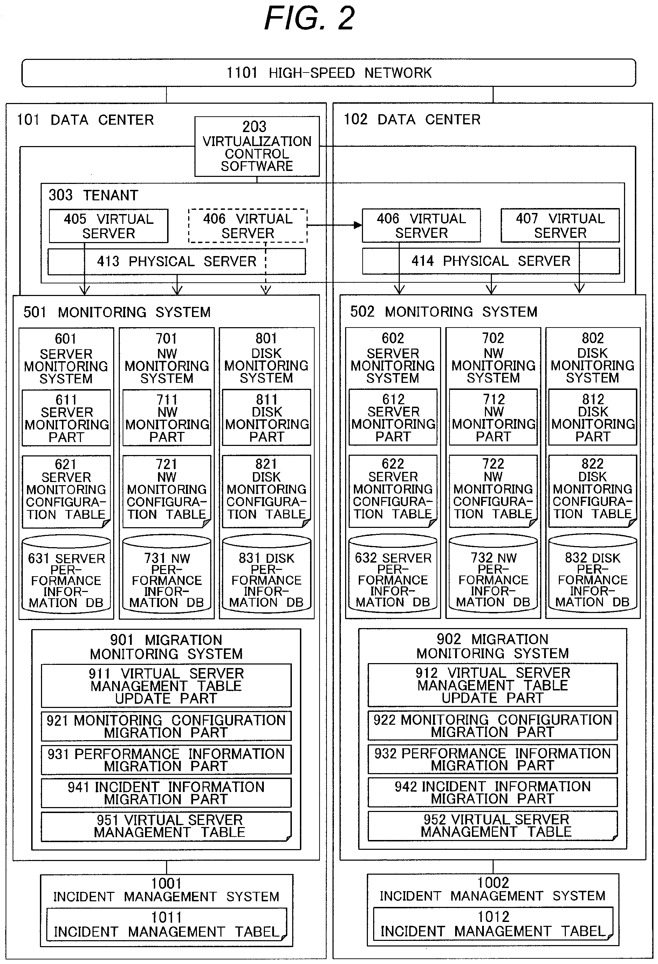

Fig. 2 is a view showing an example of the configuration in a monitoring configuration support system. The following describes the case in which a virtual server, which is one of the IT resources, is migrated between different data centers. However, the present invention can also be applied to the case in which multiple monitoring systems are provided in the same data center and a virtual server configured in a physical server monitored by one of the monitoring systems is migrated to a physical server monitored by another one of the monitoring systems present in the data center. Further, the following description mainly focuses on the structure of a data center 101, but a data center 102 has the same structure as that of the data center 101.

The monitoring configuration support system of the present embodiment is a system for migrating the monitoring configuration and performance information relating to a virtual server 406 from a monitoring system 501 to a monitoring system 502, and for migrating incident information from an incident management system 1001 to an incident management system 1002, when the virtual server 406 is migrated from the data center 101 to the data center 102. As shown in Fig. 2, the monitoring configuration support system has multiple data centers connected by a high-speed network 1101 in a tenant 303. Each of the data centers has the migration source monitoring system 501 or the migration destination monitoring system 502, and the migration source incident management system 1001 or the migration destination incident management system 1002, respectively. Further, the data center 101 as the migration source has virtualization control software 203. Note that the following description assumes that the virtualization control software 203 is present in the migration source data center 101. However, it is also possible to remotely control the virtualization control software 203 from the migration destination data center 102. In other words, the virtualization control software 203 may be located in an environment where the migration of the virtual server to be migrated can be controlled. For example, when the data center 101 is damaged or destroyed, the monitoring configuration support system of the present embodiment can be used in the migration of the virtual server present in the data center 101 from the data center 101 to the data center 102.

The tenant 303 includes a virtual server 405 present in the data center 101, a virtual server 406 migrated from the data center 101 to the data center 102, and a virtual server 407 present in the data center 102. The tenant 303 is an information system that the customer uses. The present example assumes only one tenant. However, in general, multiple tenants are present in a data center, and there is also a tenant that is not included in multiple data centers but is included in a single data center, so that these tenants are mixed in one system.

The virtualization control software 203 is the software for controlling the migration of the virtual server. The virtualization control software 203 allows the virtual server to migrate to a different physical server, by taking advantage of the instruction of the cloud operator or the occurrence of a predetermined event such as a physical failure. After the migration of the virtual server, the virtualization control software 203 notifies a migration monitoring system 901 of the occurrence of the server migration event, the migration destination data center, and the migration destination physical server.

The monitoring system 501 includes a server monitoring system 601, a NW monitoring system 701, a disk monitoring system 801, and the migration monitoring system 901. The monitoring system 501 may not only be a system for monitoring the server, network, and disk, but may include other systems for monitoring equipment such as temperature and air conditioning in the data center. On the contrary, the monitoring system 501 may include a part of the components of the present embodiment, such as only server or network.

The server monitoring system 601 includes a server monitoring part 611, a server monitoring configuration table 621, and a server performance information DB 631. The server monitoring part 611 is a program for performing threshold monitoring, process monitoring, application monitoring, and log monitoring with respect to the CPU and memory of the virtual server present in the tenant 303. If the value of any of the items to be monitored, such as CPU, memory, process, and application, exceeds a threshold value, or if the log specified in the monitoring configuration is output, the server monitoring part 611 notifies the incident management system 1001 of an incident. The server monitoring configuration table 621 holds information such as the monitoring items relating to the server with respect to the virtual servers 405 and 406 present in the data center 101, the number of alert conditions times, the number of times of measurement, the threshold value, and the target virtual server. The server performance information DB 631 holds the performance information relating to the virtual servers 405 and 406 present in the data center 101.

The NW monitoring system 701 includes a NW monitoring part 711, a NW monitoring configuration table 721, and a NW performance information DB 731. The NW monitoring part 711 is a program for monitoring the virtual server present in the tenant 303 as well as the network device. If the value of any of the items, such as those configured with the amount of data transmitted and received, exceeds a threshold value, the NW monitoring part 711 notifies the incident management system 1001 of an incident. The NW monitoring configuration table 721 holds information such as the monitoring item relating to the network with respect to the virtual servers 405 and 406 present in the data center 101, the number of alert conditions times, the number of times of measurement, the threshold value, and the target virtual server. The NW performance information DB 731 holds the performance information relating to the network of the virtual servers 405 and 406 present in the data center 101.

The disk monitoring system 801 includes a disk monitoring part 811, a disk monitoring configuration table 821, and a disk performance information DB 831. The disk monitoring part 811 is a program for monitoring the virtual server present in the tenant 303 as well as the storage device. If the value of any of the items, such as those configured with the amount of disk space, exceeds a threshold value, the disk monitoring part 811 notifies the incident management system 1001 of an incident. The disk monitoring configuration table 821 holds information such as the monitoring item relating to the disk with respect to the virtual servers 405 and 406 present in the data center 101, the number of alert conditions times, the number of times of measurement, the threshold value, and the target virtual server. The disk performance information DB 831 holds the performance information relating to the disk of the virtual servers 405 and 406 present in the data center 101.

The incident management system 1001 receives the incidents from the server monitoring part 611, the NW monitoring part 711, and the disk monitoring part 811. Then, the incident management system 1001 stores the incident information in an incident management table 1011.

The high-speed network 1101 is a network for connecting the data centers 101 and 102 with low latency. Here, the low latency is assumed to be the level at which the virtual server 406 can migrate across the data centers.

The migration monitoring system 901 includes a virtual server management table update part 911, a monitoring configuration migration part 921, a performance information migration part 931, an incident information migration part 941, and a virtual server management table 951. The virtual server management table 951 is a table that manages the virtual server present in the data center 101. The virtual server management table update part 911 is a program for updating the information of the virtual server management table 951 after receiving a virtual server migration notification from the virtualization control software 203.

The monitoring configuration migration part 921, the performance information migration part 931, and the incident information migration part 941 are programs that move the monitoring configuration and performance information of the target virtual server, respectively, to migrate the monitoring configuration and the performance information after the virtual server management table update part 911 updates the information of the virtual server management table 951, and to copy the incident information to share the incident information.

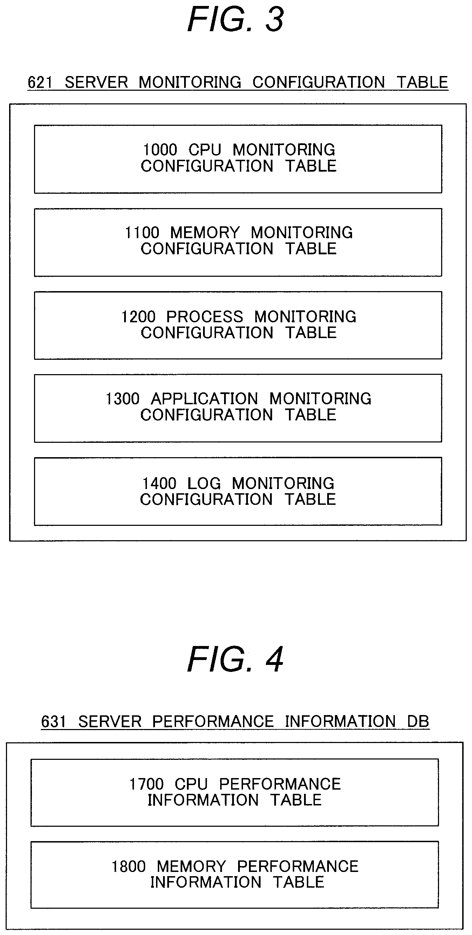

Fig. 3 is a view showing a configuration example of the server monitoring configuration table.

The server monitoring configuration table includes: a CPU monitoring configuration table 1000 which is a table for configuring the monitoring item relating to the CPU; a memory monitoring configuration table 1100 which is a table for setting the monitoring configuration relating to the memory; a process monitoring configuration table 1200 which is a table for setting the monitoring configuration relating to the process; an application monitoring configuration table 1300 which is a table for setting the monitoring configuration relating to the application; and a log monitoring configuration table 1400 which is a table for setting the monitoring configuration relating to the log.

Fig. 4 is a view showing a configuration example of the server performance information DB 631.

The server performance information DB 631 includes a CPU performance information table 1700 which is a table for storing the performance information relating to the CPU, and a memory performance information table 1800 which is a table for storing the performance information relating to the memory.

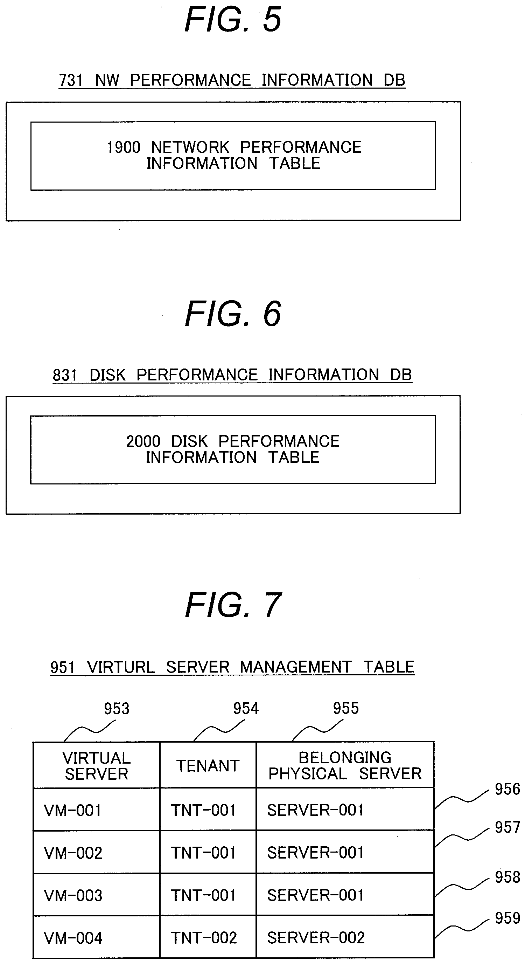

Fig. 5 is a view showing a configuration example of the NW performance information DB 731.

The NW performance information DB 731 includes a network performance information table 1900 which is a table for storing the performance information relating to the network.

Fig. 6 is a view showing a configuration example of the disk performance information DB 831.

The disk performance information DB 831 includes a disk performance information table 2000 which is a table for storing the performance information relating to the disk.

Fig. 7 is a view showing a configuration example of the virtual server management table 951.

The virtual server management table 951 stores information relating to the virtual server that the data center 101 holds. The virtual server management table 951 stores a tenant 954 to which the virtual server belongs, and a physical server 955, which is the host name of the physical server that the virtual server belongs to (or operations on), in association with the response of the virtual server 953 which is the host name of the virtual server.

With respect to records 956, 957, 958, and 959 stored in the virtual server management table 951, one record corresponds to the information of one virtual server, which shows which virtual server belongs to which tenant and which physical server the virtual server runs on.

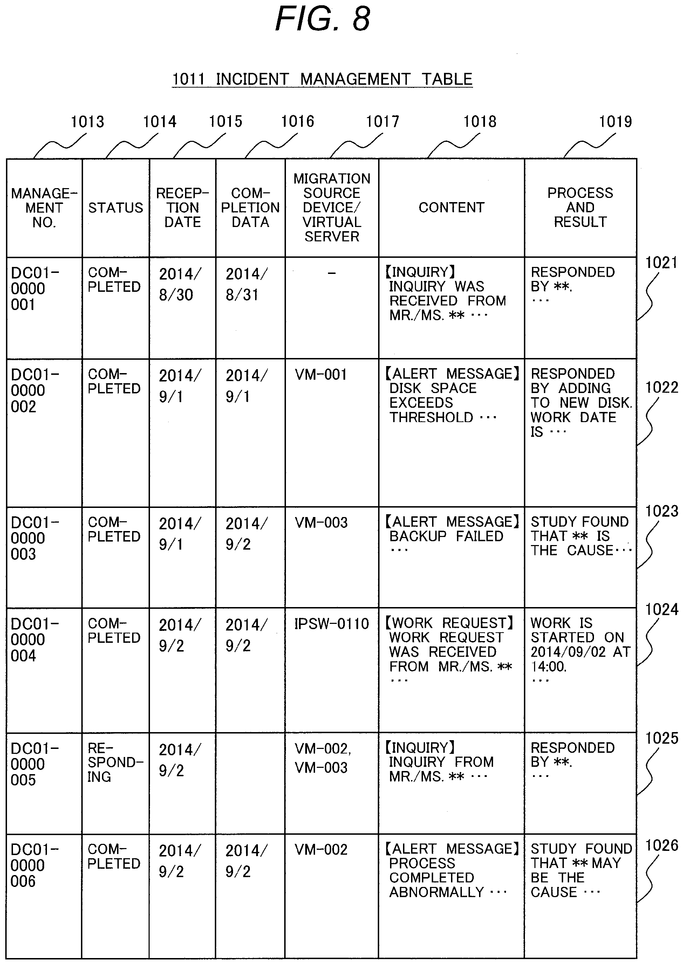

Fig. 8 is a view showing a configuration example of the incident management table 1011.

The incident management table 1011 stores the information of the incidents occurred in the data center 101. The incident management table 1011 includes: a status 1014 which is the status or each incident, such as received, responding, and response completed; a reception date 1015 which is the date when the incident is detected (received); a completed data 1016 which is the data when the response to the incident is completed; a source device/virtual server 1017 which is the host name of the device or virtual server in which a failure occurred; and content, process, and result 1019 which is the process of each incident and the result thereof. All these data are stored in association with a management number 1013 indicating each incident. In Fig. 8, the alert message that the system transmits, as well as the inquiry and work request from the customer are described as examples of the incident. However, other events are included as long as they can lead to a reduction in the quality of service or to an interruption of service.

With respect to records 1019, 1020, 1021, and 1022 stored in the incident management table 1011, one record corresponds to the information of one incident. It is possible to narrow down to the incident relating to a certain virtual server by searching a migration source virtual server 1017 and a content 1018 with keywords.

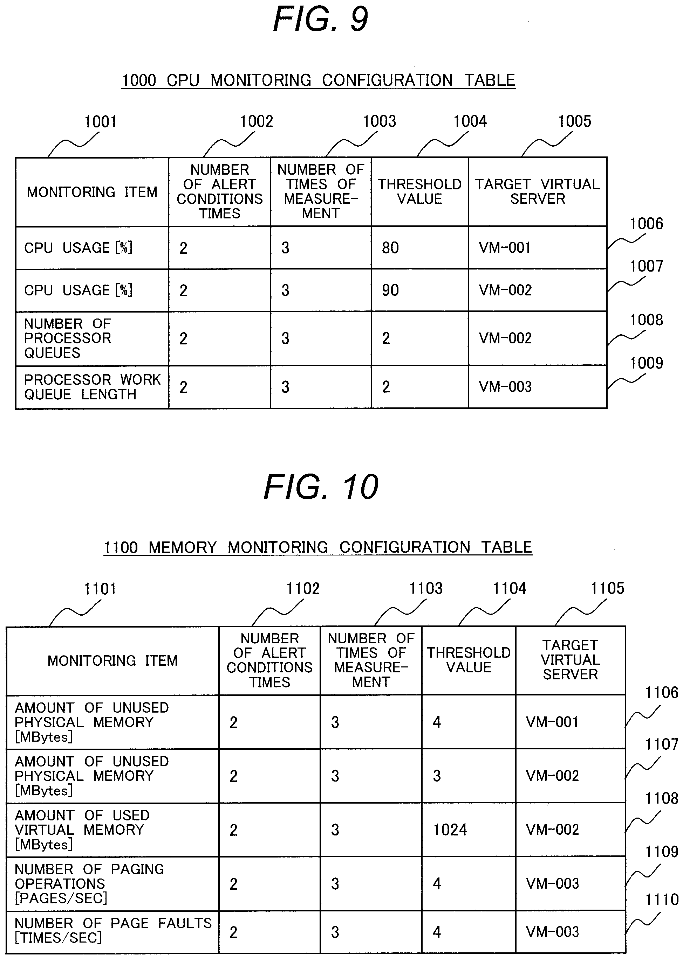

Fig. 9 is a view showing a configuration example of the CPU monitoring configuration table 1000.

The CPU monitoring configuration table 1000 stores the CPU monitoring configuration for a target to be monitored. The CPU monitoring configuration table 1000 stores: a monitoring item 1001 set to the target to be monitored; a number of alert conditions times 1002, which is the reference number to determine that an abnormality has occurred when the number of times that the number of times of measurement exceeds the threshold value, exceeds the reference number; a number of times of measurement 1003 which is the monitoring period unit; a threshold value 1004 which is the value set to the monitoring item; and a target virtual server 1005 which is the host name of the target to be monitored of the server monitoring system.

Fig. 10 is a view showing a configuration example of the memory monitoring configuration table 1100.

The memory monitoring configuration table 1100 stores the memory monitoring configuration for a target to be monitored. The memory monitoring configuration table 1100 stores: a monitoring item 1101 set to the target to be monitored; a number of alert conditions times 1102, which is the reference number to determine that an abnormality has occurred when the number of times that the number of times of measurement exceeds the threshold exceeds the reference number; a number of times of measurement 1103 which is the monitoring period unit; a threshold value 1104 which is the value set to the monitoring item; and a target virtual server 1105 which is the host name of the target to be monitored.

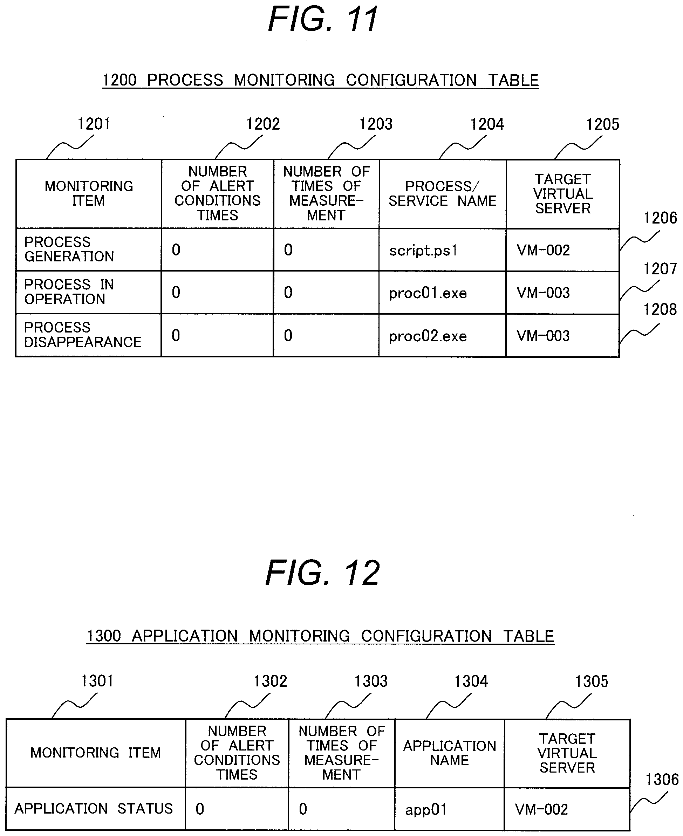

Fig. 11 is a view showing a configuration example of the process monitoring configuration table 1200.

The process monitoring configuration table 1200 stores the process monitoring configuration for a target to be monitored. The process monitoring configuration table 1200 stores: a monitoring item 1201 set to the target to be monitored; a number of alert conditions times 1202, which is the reference number to determine that an abnormality has occurred when the number of times that the number of times of measurement exceeds the threshold value, exceeds the reference number; a number of times of measurement 1203 which is the monitoring period unit; a process/service name 1204 which specifies the process/service name which is the monitoring item; and a target virtual server 1205 which is the host name of the target to be monitored.

Fig. 12 is a view showing a configuration example of the application monitoring configuration table 1300.

The application monitoring configuration table 1300 stores the application monitoring configuration for a target to be monitored. The application monitoring configuration table 1300 stores: a monitoring item 1301 set to the target to be monitored; a number of alert conditions times 1302, which is the reference number to determine that an abnormality has occurred when the number of times that the number of times of measurement exceeds the threshold value, exceeds the reference number; a number of times of measurement 1303 which is the monitoring period unit; an application name 1304 which specifies the application name which is the monitoring item; and a target virtual server 1305 which is the host name of the target to be monitored.

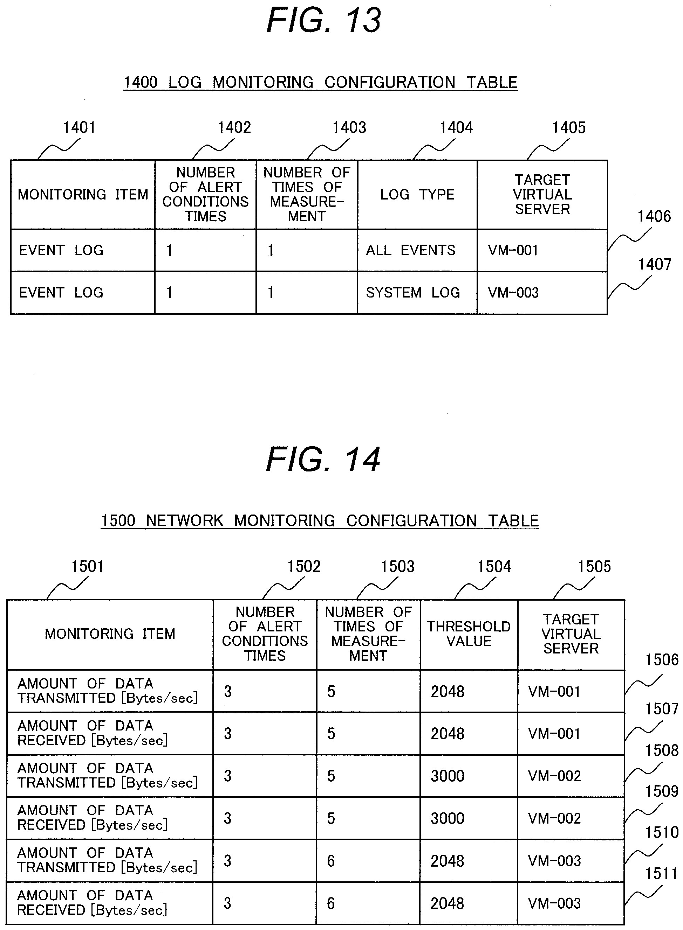

Fig. 13 is a view showing a configuration example of the log monitoring configuration table 1400.

The log monitoring configuration table 1400 stores the log monitoring configuration for a target to be monitored. The log monitoring configuration table 1400 stores: a monitoring item 1401 set to the target to be monitored; a number of alert conditions times 1402, which is the reference number to determine that an abnormality has occurred when the number of times that the number of times of measurement exceeds the threshold value, exceeds the reference number; a number of times of measurement 1403 which is the monitoring period unit; a log type 1404 which specifies the log to be collected; and a target virtual server 1305 which is the host name of the target to be monitored.

Fig. 14 is a view showing a configuration example of the network monitoring configuration table 1500.

The network monitoring confirmation table 1500 stores the network monitoring configuration for a target to be monitored. The network monitoring configuration table 1500 stores: a monitoring item 1501 set to the target to be monitored; a number of alert conditions times 1502, which is the reference number to determine that an abnormality has occurred when the number of times that the number of times of measurement exceeds the threshold value, exceeds the reference number; a number of times of measurement 1503 which is the monitoring period unit; a threshold value 1504 which is the value set to the target to be monitored; and a target virtual server 1505 which is the host name of the target to be monitored.

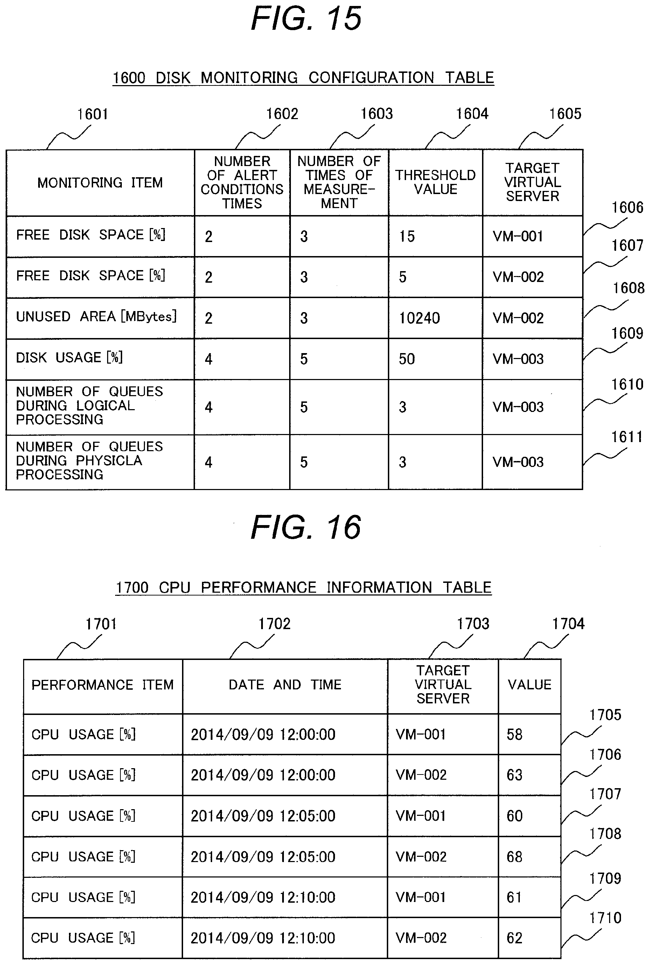

Fig. 15 is a view showing a configuration example of the disk monitoring configuration table 1600.

The disk monitoring configuration table 1600 stores the disk monitoring configuration for a target to be monitored. The disk monitoring configuration table 1600 stores: a monitoring item 1601 set to the target to be monitored; a number of alert conditions times 1602, which is the reference number to determine that an abnormality has occurred when the number of times that the number of times of measurement exceeds the threshold value, exceeds the reference number; a number of times of measurement 1603 which is the monitoring period unit; a threshold value 1604 which is the value set to the monitoring item; and a target virtual server 1605 which is the host name of the target to be monitored.

Fig. 16 is a view showing a configuration example of the CPU performance information table 1700.

The CPU performance information table 1700 stores the CPU performance information of a target to be monitored, which is periodically collected by the server monitoring system. The CPU performance information table 1700 stores: a performance item 1701 which is the item of the collected performance information; a date and time 1702 which is the date and time when the information was collected; a target virtual server 1703 which is the host name of the target to be monitored; and a value 1704 which is the value of the collected performance information.

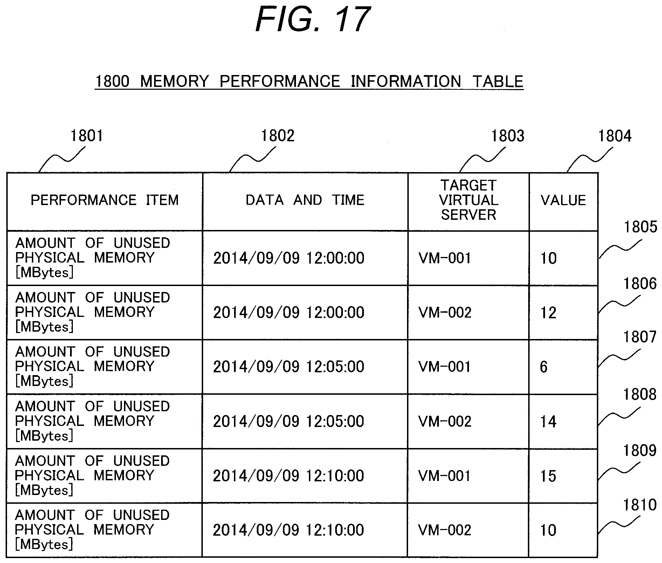

Fig. 17 is a view showing a configuration example of the memory performance information table 1800.

The memory performance information table 1800 stores the memory performance information of a target to be monitored, which is periodically collected by the server monitoring system. The memory performance information table 1800 stores: performance information 1801 which is the item of the collected performance information; a date and time 1802 which is the data and time when the information was collected; a target virtual server 1803 which is the host name of the target to be monitored; and a value 1804 which is the value of the collected performance information.

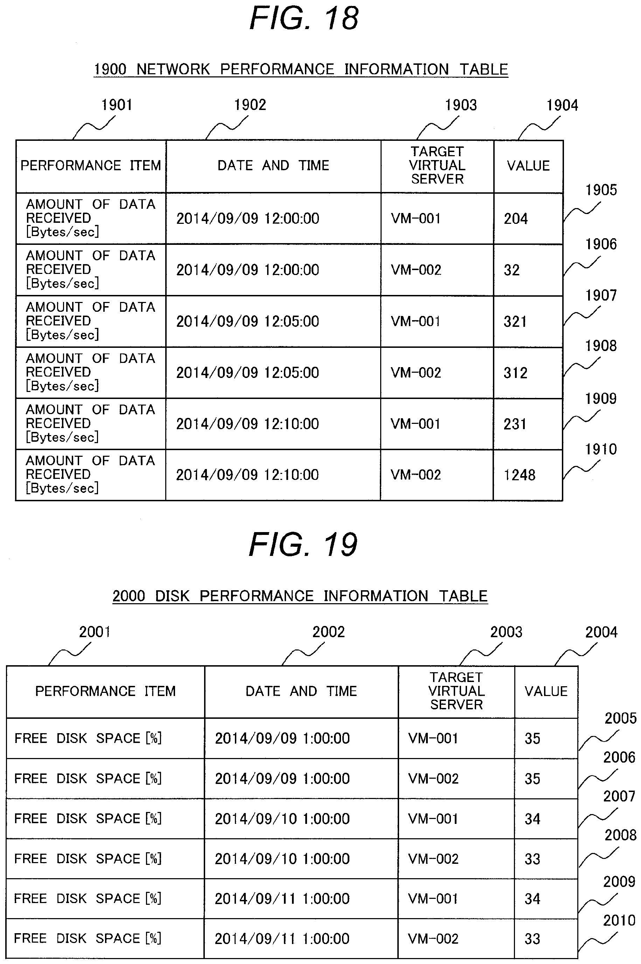

Fig. 18 is a view showing a configuration example of the network performance information table 1900.

The network performance information table 1900 stores the network performance information of a target to be monitored, which is periodically collected by the network monitoring system. The network performance information table 1900 stores: performance information 1901 which is the item of the collected performance information; a date and time 1902 which is the date and time when the information was collected; a target virtual server 1903 which is the host name of the target to be monitored; and a value 1904 which is the value of the collected performance information.

Fig. 19 is a view showing a configuration example of the disk performance information table 2000.

The disk performance information table 2000 stores the disk performance information of a target to be monitored, which is periodically collected by the disk monitoring system. The disk performance information table 2000 stores: performance information 2001 which is the item of the collected performance information; a date and time 2002 which is the date and time when the information was collected; a target virtual sever 2003 which is the host name of the target to be monitored; and a value 2004 which is the value of the collected performance information.

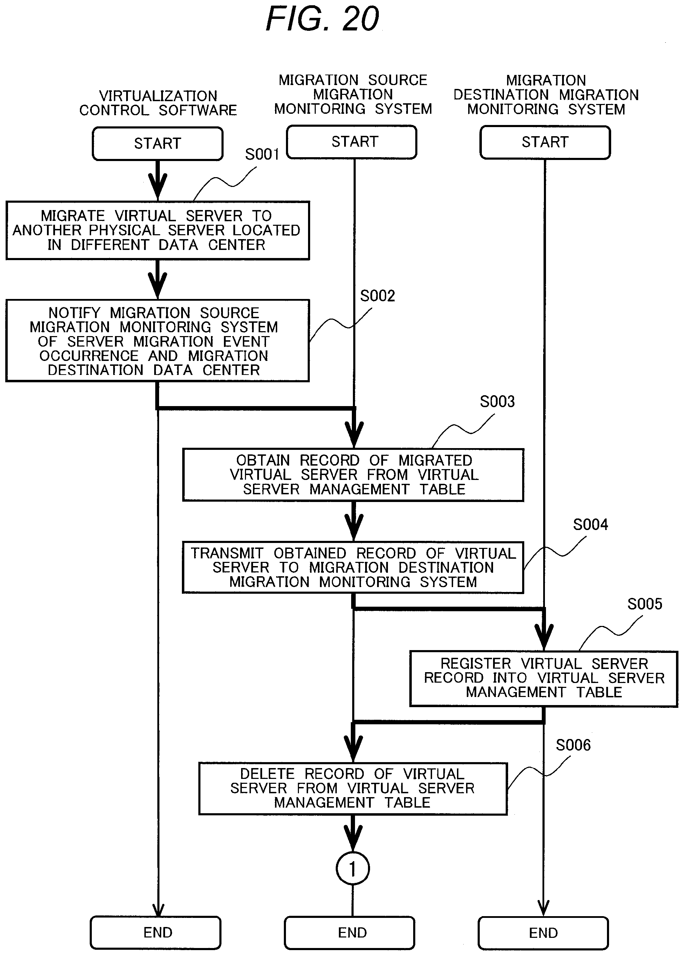

Fig. 20 is a flow chart showing the flow of the virtual server management table update process in the virtual server migration process. A virtual server is migrated onto the other physical server whose data center is different from that of the virtual server migrated by the virtualization control software 203 (Step S001). More specifically, it is assumed that the virtualization control software 203 migrates the virtual server 406 with the host name VM-001, from the physical server SERVER-001 present in the data center 101 to the physical server SERVER-001 present in the data center 102.

The virtualization control software 203 notifies the migration source migration monitoring system that a virtual server migration event has occurred, and of the migration destination data center (Step S002). More specifically, the virtualization control software 203 notifies the migration monitoring system 901 that the virtual server 406 has been migrated to the data center 102.

The migration source migration monitoring system obtains the record of the migrated virtual server, from the virtual server management table (Step S003). More specifically, the migration monitoring system 901 obtains the record 956 of the host name VM-001 from the virtual server management table 951.

The migration source migration monitoring system transmits the obtained record of the virtual server to the migration destination migration monitoring system (Step S004). More specifically, the migration monitoring system 902 receives the information of the record 956 of the virtual server 406 from the migration monitoring system 901.

The migration destination migration monitoring system registers the record of the virtual server in which the value of the belonging physical server is rewritten, into the virtual server management table (Step S005). More specifically, the migration monitoring system 902 adds the record of the virtual server VM-001, the tenant TNT-001, and the physical server SERVER-001 to which the virtual server belongs, to the virtual server management table 952.

The migration source migration monitoring system deletes the record of the virtual server from the virtual server management table (Step S006). More specifically, the migration monitoring system 901 deletes the record 956 of the virtual server 406 from the virtual server management table 951.

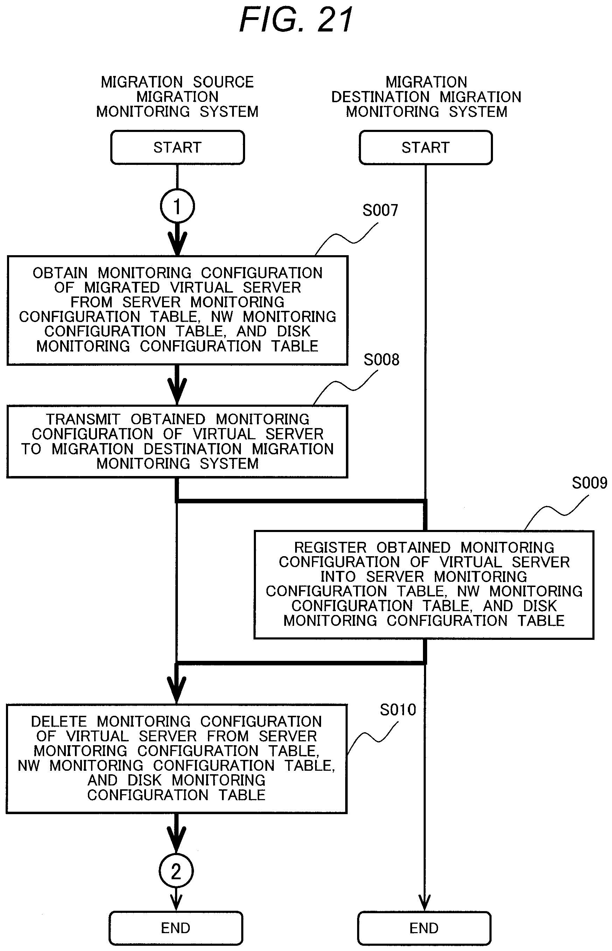

Fig. 21 is a flow chart showing the flow of the monitoring configuration migration process in the virtual server migration process. The following process can be performed by taking advantage of the process described above, for example, such as detecting migration of the virtual server in the virtual server management table update process shown in Fig. 20.

The migration source migration monitoring system obtains the virtual server monitoring configuration from the server monitoring configuration table, the NW monitoring configuration table, and the disk monitoring configuration table (Step S007). More specifically, the monitoring configuration migration part 921 of the migration monitoring system 901 searches the monitoring configuration of the virtual server 406 with the host name VM-001 as the target to be monitored, from the server monitoring configuration table 621, the NW monitoring configuration table 721, and the disk monitoring configuration table 821. Then, the monitoring configuration migration part 921 of the migration monitoring system 901 obtains a record 1006 of the CPU monitoring configuration table 1000, a record 1106 of the memory monitoring configuration table 1100, a record 1406 of the log monitoring configuration table 1400, records 1506 and 1507 of the network monitoring configuration table 1500, and a record 1606 of the disk monitoring configuration table 1600.

The migration source migration monitoring system transmits the obtained monitoring configuration of the virtual server to the migration destination migration monitoring system (Step S008). More specifically, the monitoring configuration migration part 921 of the migration monitoring system 901 transmits the record 1006 of the CPU monitoring configuration table 1000, the record 1106 of the memory monitoring configuration table 1100, the record 1406 of the log monitoring configuration table 1400, the records 1506 and 1507 of the network monitoring configuration table 1500, and the record 1606 of the disk monitoring configuration table 1600 to the migration monitoring system 902.

The migration destination migration monitoring system registers the obtained monitoring configuration of the virtual server into the server monitoring configuration table, the NW monitoring configuration table, and the disk monitoring configuration table (Step S009). More specifically, the monitoring configuration migration part 922 of the migration monitoring system 902 registers the record 1006 of the CPU monitoring configuration table 1000, the record 1106 of the memory monitoring configuration table 1100, the record 1406 of the log monitoring configuration table 1400, the records 1506 and 1507 of the network monitoring configuration table 1500, and the record 1606 of the disk monitoring configuration table 1600 into the server monitoring configuration table 622, the NW monitoring configuration table 722, and the disk monitoring configuration table 822, respectively.

The migration source migration monitoring system deletes the monitoring configuration of the virtual server, from the server monitoring configuration table, the NW monitoring configuration table, and the disk monitoring configuration table (Step S010). More specifically, the monitoring configuration migration part 921 of the migration monitoring system 901 deletes the record 1006 of the CPU monitoring configuration table 1000, the record 1106 of the memory monitoring configuration table 1100, the record 1406 of the log monitoring configuration table 1400, the records 1506 and 1507 of the network monitoring configuration table 1500, and the record 1606 of the disk monitoring configuration table 1600, from the server monitoring configuration table 621, the NW monitoring configuration table 721, and the disk monitoring configuration table 821, respectively.

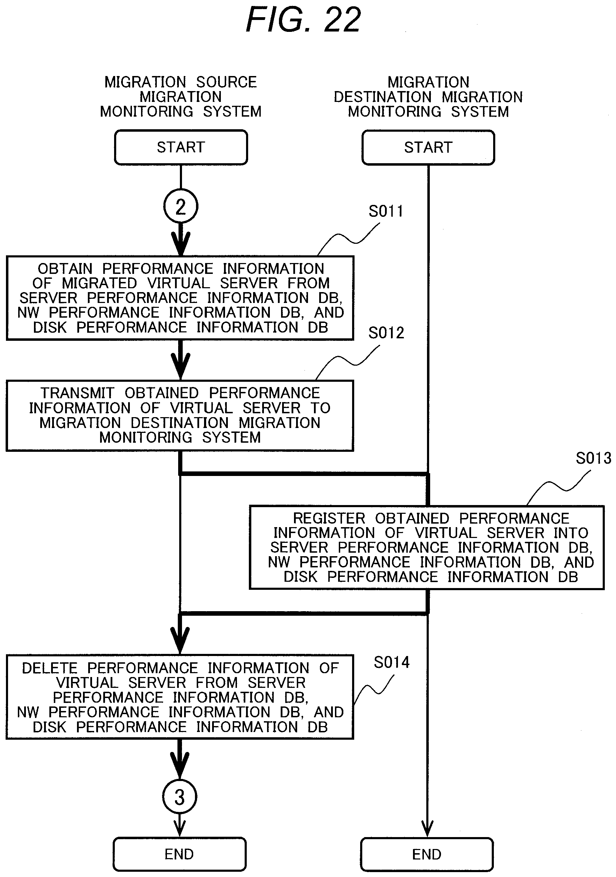

Fig. 22 is a flow chart showing the flow of the performance information migration process in the virtual server migration process. The following process can be performed by taking advantage of the process described above, for example, such as detecting migration of the virtual server in the virtual server management table update process shown in Fig. 20.

The migration source migration monitoring system obtains the performance information of the migrated virtual server, from the server performance information DB, the NW performance information DB, and the disk performance information DB (Step S011). More specifically, the performance information migration part 931 of the migration monitoring system 901 searches the server performance information DB 631, the network performance information DB 731, and the disk performance information DB 831. Then, the performance information migration part 931 obtains records 1705, 1707, and 1709 of the CPU performance information table 1700, records 1805, 1807, and 1809 of the memory performance information table 1800, records 1905, 1907, and 1909 of the network performance information table 1900, and records 2005, 2007, and 2009 of the disk performance information table 2000.

The migration source migration monitoring system transmits the obtained virtual server performance information to the migration destination migration monitoring system (Step S012). More specifically, the performance information migration part 931 of the migration monitoring system 901 searches the server performance information DB 631, the network performance information DB 731, and the disk performance information DB 831. Then, the performance information migration part 931 transmits the records 1705, 1707, and 1709 of the CPU performance information table 1700, the records 1805, 1807, and 1809 of the memory performance information table 1800, the records 1905, 1907, and 1909 of the network performance information table 1900, and the records 2005, 2007, and 2009 of the disk performance information table 2000 to the migration monitoring system 902.

The migration source migration monitoring system registers the obtained virtual server performance information into the server performance information DB, the NW performance information DB, and the disk performance information DB (Step S013). More specifically, the performance information migration part 932 of the migration configuration system 902 registers the records 1705, 1707, and 1709 of the CPU performance information table 1700, the records 1805, 1807, and 1809 of the memory performance information table 1800, the records 1905, 1907, and 1909 of the network performance information table 1900, and the records 2005, 2007, and 2009 of the disk performance information table 2000, into the server performance information DB 632, the NW performance information DB 732, and the disk performance information DB 832, respectively.

The migration source migration monitoring system deletes the virtual server performance information from the server performance information DB, the NW performance information DB, and the disk performance information DB (Step S014). However, this step may be omitted and the migration source virtual server may also continue to hold the performance information even after the migration. In the case of deleting the performance information, more specifically, the performance information migration part 931 of the migration monitoring system 901 deletes the records 1705, 1707, and 1709 of the CPU performance information table 1700, the records 1805, 1807, and 1809 of the memory performance information table 1800, the records 1905, 1907, and 1909 of the network performance information table 1900, and the records 2005, 2007, and 2009 of the disk performance information table 2000, from the server performance information DB 631, the NW performance information DB 731, and the disk performance information DB 831, respectively. If the records are not deleted, the migration source migration monitoring system does nothing and proceeds to the next step.

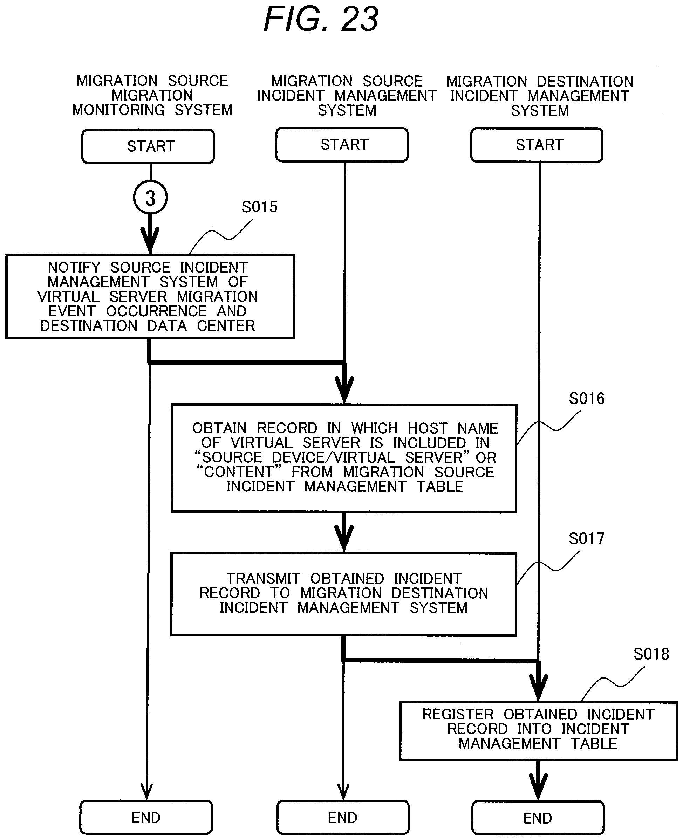

Fig. 23 is a flow chart showing the flow of the incident information migration process in the virtual server migration process. The following process can be performed by taking advantage of the process described above, for example, such as detecting migration of the virtual server in the virtual server management table update process shown in Fig. 20.

The migration source migration monitoring system notifies the migration source incident management system that a virtual server migration event has occurred, and of the migration destination data center (Step S015). More specifically, the incident information migration part 941 of the migration monitoring system 901 notifies the incident management system 1001 that a migration event of the virtual server 406 has occurred.

The migration source incident management system obtains the record in which the host name of the virtual server is included in "source device/virtual server" or "content", from the migration source incident management table (Step S016). More specifically, the incident management system 1001 obtains the record 1022 of the virtual server 406 with the host name VM-001 included in any of the source device/virtual server 1017, the content 1018, and the process and result 1019, from the incident management table 1011. Here, it is searched by the host name, but it is also possible to use information other than the host name, for example, such as the IP address, as long as it can identify the migrated virtual server. In this case, for example, a column that can identify the IP address of the virtual server is added to the virtual server management table 951, so that the information of the IP address is also transmitted when the record of the virtual server is transmitted.

The migration source incident management system transmits the obtained record of the incident to the destination incident management system (Step S017). More specifically, the incident management system 1001 transmits the record 1022 of the incident management table 1011 to the incident management system 1002.

The incident management system 1002 registers the obtained record of the incident into the incident management table (Step S018). More specifically, the incident management system 1002 registers the record 1022 of the incident management table 1011 into the incident management table 1012. Here, the migration source incident management system should continue to hold the incident information relating to the virtual server also after the migration, and may not delete the record after the migration.

According to the monitoring configuration support apparatus of the present embodiment, it is possible to migrate the monitoring configuration relating to the virtual server migrated to a different data center, which is held by the migration source monitoring system, to the migration destination monitoring system. As a result, the system can perform monitoring management of the virtual server properly.

Further, according to the monitoring configuration support apparatus of the present embodiment, the migration destination monitoring system can also hold the performance information relating to the virtual server migrated to a different data center, which is held by the migration source monitoring system. As a result, it is possible to display the performance information including the information before the migration, and to analyze the tendency of the use of the resources.

Further, according to the monitoring configuration support apparatus of the present embodiment, the migration destination incident management system can also hold the incident information relating to the virtual server migrated to a different data center, which is held by the migration source incident management system. As a result, it is possible to quickly response to an incident relating to the virtual server, which occurred after the migration, by referring to the past incident information.

As described above, according to the present system, even in the case in which the virtual server is migrated from the first data center which is the migration source, to the second data center which is the migration destination with a different target to be monitored, it is possible to perform monitoring management of the virtual server, without disturbing the monitoring range of the monitoring system.

The present embodiment has been described above, however, the purpose of the above embodiment is to facilitate the understanding of the present invention, and is not intended to be construed as limiting the present invention.

For example, in the above embodiment, it is assumed that the incident management systems 1001 and 1002 are present in the data centers 101 and 102, respectively, but may be provided in a data center operated by an operator that differs from the operator of the data centers 101 and 102. Further, the above embodiment is described on the assumption that the virtual server is migrated from the data center 101 to the data center 102. However, if the migrated virtual server is migrated again to the data center 101, it can be considered in a similar way. In other words, similar to the incident information, when the monitoring configuration and performance information are not deleted upon migration from the data center 101 to the data center 102, it is possible to use the monitoring configuration and performance information as they are without being migrated, when the virtual server is re-migrated from the data center 102 to the data center 101.

Further, it may be possible to provide or distribute the program for realizing each of the functions of the present system in such a way that the program is loaded into ROM or other storage medium in advance, or recorded with a file of instable format or executable format into a computer readable recording medium such as CD-ROM, CD-R, and DVD (Digital Versatile Disk). It is also possible to provide or distribute the program in such a way that the program is stored in a computer connected to a network, such as the Internet, and downloaded through the network.

## Claims

1. A monitoring support system for supporting monitoring of the migration of an IT resource, the monitoring support system comprising:
the IT resource belongs to a tenant, wherein the tenant is provided in multiple different data centers,
a virtualization control part for migrating the IT resource from a first monitoring system which is provided in a first data center of the different data centers as a migration source to a second monitoring system which is provided in a second data center of the different data centers as a migration destination;
an IT resource management table update part for updating the migration source IT resource stored in an IT resource table in which the migration source IT resource or the migration destination IT resource is associated with the physical server to which the IT resource belongs;
a monitoring configuration migration part for migrating the monitoring configuration of the migration source IT resource from the first monitoring system to the second monitoring system; and
a performance information migration part for migrating the performance information of the migration source IT resource from the first monitoring system to the second monitoring system.

2. The monitoring support system according to claim 1, further comprising an incident information migration part for sharing the incident information relating to the migration source IT resource between a first incident management system that manages incidents in the migration source IT resource, and a second incident management system in the migration destination IT resource.

3. The monitoring support system according to claim 2,
wherein the monitoring configuration migration part and the performance information migration part move the monitoring configuration and performance information of the migration source IT resource, respectively, to migrate the monitoring configuration and the performance information, respectively, and
wherein the incident information migration part copies the migration source incident information to share the migration source incident information between the first and second incident management systems.

4. The monitoring support system according to claim 2, the monitoring support system comprising:
a first data center including the virtualization control part, the IT resource management table update part, the monitoring configuration migration part, and the performance information migration part; and
a second data center including the incident information migration part,
wherein the virtualization control part, the monitoring configuration migration part, and the performance information migration part migrate the IT resource and the monitoring configuration, from the first data center as the migration source to the first data center as the migration destination, respectively, and
wherein the incident management part copies the incident information from the second data center as the migration source to the second data center as the migration destination.

5. The monitoring support system according to claim 2,
wherein the monitoring configuration migration part, or the performance information migration part, or the incident information migration part migrates the monitoring configuration, or the performance information, or the incident information by taking advantage of the migration of the IT resource, respectively.

6. A monitoring support method for supporting monitoring of the migration of an IT resource which belongs to a tenant, wherein the tenant is provided in multiple different data centers, the monitoring support method comprising:
a migration step for migrating the IT resource from a first monitoring system which is provided in a first data center of the different data centers as a migration source to a second monitoring system which is provided in a second data center as a migration destination;
a table update step for updating the migration source IT resource stored in an IT resource table in which the migration source IT resource or the migration destination IT resource is associated with the physical server to which the IT resource belongs;
a monitoring configuration migration step for migrating the monitoring configuration of the migration source IT resource from the first monitoring system to the second monitoring system; and a performance information migration step for migrating the performance information of the migration source IT resource from the first monitoring system to the second monitoring system.

7. The monitoring support method according to claim 6, further comprising an incident information migration step for sharing the incident information relating to the migration source IT resource, between a first incident management system that manages incidents in the migration source IT resource, and a second incident management system in the migration destination IT resource.

8. The monitoring support method according to claim 7,
wherein the monitoring configuration migration step and the performance information migration step move the monitoring configuration and performance information of the migration source IT resource, respectively, to migrate the monitoring configuration and the performance information, respectively, and
wherein the incident information migration step copies the migration source incident information to share the migration source incident information between the first and second incident management systems.

9. A monitoring support program,
wherein the monitoring support program causes a computer to perform:
a migration step for migrating an IT resource belonging to a tenant, wherein the tenant is provided in multiple different data centers, from a first monitoring system provided in a first data center of the different data centers as a migration source to a second monitoring system provided in a second data center of the different data centers as a migration destination;
a table update step for updating the migration source IT resource stored in an IT resource table in which the migration source IT resource or the migration destination IT resource is associated with the physical server to which the IT resource belongs;
a monitoring configuration migration step for migrating the monitoring configuration of the migration source IT resource from the first monitoring system to the second monitoring system; and a performance information migration step for migrating the performance information of the migration source IT resource from the first monitoring system to the second monitoring system.

10. The monitoring support program according to claim 9,
wherein the monitoring support program causes the computer to further perform an incident information migration step for sharing the incident information relating to the migration source IT resource, between a first incident management system that manages incidents in the migration source IT resource, and a second incident management system in the migration destination IT resource.

11. The monitoring support program according to claim 10,
wherein the monitoring configuration migration step and the performance information migration step move the monitoring configuration and performance information of the migration source IT resource, respective, to migrate the monitoring configuration and the performance information, respectively, and
wherein the incident information migration step copies the migration source incident information to share the migration source incident information between the first and second incident management systems.

## Patentansprüche

1. Überwachungsunterstützungssystem zur Unterstützung der Überwachung der Migration einer IT-Ressource, wobei das Überwachungsunterstützungssystem Folgendes umfasst:
wobei die IT-Ressource einem Mandanten gehört, wobei der Mandant in mehreren verschiedenen Datenzentren bereitgestellt ist;
einen Virtualisierungssteuerteil zum Migrieren der IT-Ressource von einem ersten Überwachungssystem, das in einem ersten Datenzentrum der verschiedenen Datenzentren als Migrationsquelle bereitgestellt ist, in ein zweites Überwachungssystem, das in einem zweiten Datenzentrum der verschiedenen Datenzentren als Migrationsziel bereitgestellt ist;
einen IT-Ressourcenverwaltungstabellenaktualisierungsteil zum Aktualisieren der Migrationsquellen-IT-Ressource, die in einer IT-Ressourcentabelle gespeichert ist, in der die Migrationsquellen-IT-Ressource oder die Migrationsziel-IT-Ressource dem physischen Server zugeordnet ist, zu dem die IT-Ressource gehört;
einen Überwachungskonfigurationsmigrationsteil zum Migrieren der Überwachungskonfiguration der Migrationsquellen-IT-Ressource von dem ersten Überwachungssystem in das zweite Überwachungssystem und
einen Leistungsinformationsmigrationsteil zum Migrieren der Leistungsinformation der Migrationsquellen-IT-Ressource aus dem ersten Überwachungssystem in das zweite Überwachungssystem.

2. Überwachungsunterstützungssystem nach Anspruch 1, das ferner einen Vorfallsinformationsmigrationsteil umfasst, um die Vorfallsinformation in Bezug auf die Migrationsquellen-IT-Ressource mit einem ersten Vorfallsverwaltungssystem, das Vorfälle in der Migrationsquellen-IT-Ressource verwaltet, und einem zweiten Vorfallsverwaltungssystem in der Migrationsziel-IT-Ressource zu teilen.

3. Überwachungsunterstützungssystem nach Anspruch 2, wobei der Überwachungskonfigurationsmigrationsteil und der Leistungsinformationsmigrationsteil die Überwachungskonfiguration bzw. Leistungsinformation der Migrationsquellen-IT-Ressource bewegen, um die Überwachungskonfiguration bzw. die Leistungsinformation zu migrieren, und
wobei der Vorfallsinformationsmigrationsteil die Migrationsquellenvorfallsinformationen kopiert, um diese mit dem ersten und zweiten Vorfallsverwaltungssystem zu teilen.

4. Überwachungsunterstützungssystem nach Anspruch 2, wobei das Überwachungsunterstützungssystem Folgendes umfasst:
ein erstes Datenzentrum, das den Virtualisierungssteuerteil, den IT-Ressourcenverwaltungstabellenaktualisierungsteil, den Überwachungskonfigurationsmigrationsteil und den Leistungsinformationsmigrationsteil umfasst, und
ein zweites Datenzentrum, das den Vorfallsinformationsmigrationsteil umfasst,
wobei der Virtualisierungssteuerteil, der Überwachungskonfigurationsmigrationsteil und der Leistungsinformationsmigrationsteil die IT-Ressource und die Überwachungskonfiguration aus dem ersten Datenzentrum als die Migrationsquelle in das erste Datenzentrum als Migrationsziel migrieren und
wobei der Vorfallsinformationsverwaltungsteil die Vorfallsinformationen aus dem zweiten Datenzentrum als die Migrationsquelle in das zweite Datenzentrum als das Migrationsziel kopiert.

5. Überwachungsunterstützungssystem nach Anspruch 2, wobei der Überwachungskonfigurationsmigrationsteil oder der Leistungsinformationsmigrationsteil oder der Vorfallsinformationsmigrationsteil die Überwachungskonfiguration oder die Leistungsinformation oder die Vorfallsinformation durch Nutzen der Migration der IT-Ressource migriert.

6. Überwachungsunterstützungsverfahren zur Unterstützung der Überwachung der Migration einer IT-Ressource, die zu einem Mandanten gehört, wobei der Mandant in mehreren verschiedenen Datenzentren bereitgestellt ist, wobei das Überwachungsunterstützungsverfahren Folgendes umfasst:
einen Migrationsschritt zum Migrieren der IT-Ressource aus einem ersten Überwachungssystem, das in einem ersten Datenzentrum der verschiedenen Datenzentren als eine Migrationsquelle bereitgestellt ist, in ein zweites Überwachungssystem, das in einem zweiten Datenzentrum der verschiedenen Datenzentrum als ein Migrationsziel bereitgestellt ist;
einen Tabellenaktualisierungsschritt zum Aktualisieren der Migrationsquellen-IT-Ressource, die in einer IT-Ressourcentabelle gespeichert ist, in der die Migrationsquellen-IT-Ressource oder die Migrationsziel-IT-Ressource dem physischen Server zugeordnet ist, zu dem die IT-Ressource gehört;
einen Überwachungskonfigurationsmigrationsschritt zum Migrieren der Überwachungskonfiguration der Migrationsquellen-IT-Ressource aus dem ersten Überwachungssystem in das zweite Überwachungssystem und
einen Leistungsinformationsmigrationsschritt zum Migrieren der Leistungsinformation der Migrationsquellen-IT-Ressource aus dem ersten Überwachungssystem in das zweite Überwachungssystem.

7. Überwachungsunterstützungsverfahren nach Anspruch 6, das ferner einen Vorfallsinformationsmigrationsschritt zum Teilen von Vorfallsinformationen in Bezug auf die Migrationsquellen-IT-Ressource mit einem ersten Vorfallsverwaltungssystem, das Vorfälle in der Migrationsquellen-IT-Ressource verwaltet, und einem zweiten Vorfallsverwaltungssystem in der Migrationsziel-IT-Ressource umfasst.

8. Überwachungsunterstützungsverfahren nach Anspruch 7, wobei der Überwachungskonfigurationsmigrationsschritt und der Leistungsinformationsmigrationsschritt die Überwachungskonfiguration bzw. die Leistungsinformation der Migrationsquellen-IT-Ressource bewegen, um die Überwachungskonfiguration bzw. die Leistungsinformation zu migrieren, und
wobei der Vorfallsinformationsmigrationsschritt die Migrationsquellenvorfallsinformationen kopiert, um die Migrationsquellenvorfallsinformationen mit dem ersten und dem zweiten Vorfallsverwaltungssystem zu teilen.

9. Überwachungsunterstützungsprogramm,
wobei das Überwachungsunterstützungsprogramm bewirkt, dass ein Computer Folgendes ausführt:
einen Migrationsschritt zum Migrieren einer IT-Ressource, die zu einem Mandanten gehört, wobei der Mandant in mehreren verschiedenen Datenzentren bereitgestellt ist, aus einem ersten Überwachungssystem, das in einem ersten Datenzentrum der verschiedenen Datenzentren als eine Migrationsquelle bereitgestellt ist, in ein zweites Überwachungssystem, das in einem zweiten Datenzentrum der verschiedenen Datenzentrum als ein Migrationsziel bereitgestellt ist;
einen Tabellenaktualisierungsschritt zum Aktualisieren der Migrationsquellen-IT-Ressource, die in einer IT-Ressourcentabelle gespeichert ist, in der die Migrationsquellen-IT-Ressource oder die Migrationsziel-IT-Ressource dem physischen Server zugeordnet ist, zu dem die IT-Ressource gehört;
einen Überwachungskonfigurationsmigrationsschritt zum Migrieren der Überwachungskonfiguration der Migrationsquellen-IT-Ressource aus dem ersten Überwachungssystem in das zweite Überwachungssystem und
einen Leistungsinformationsmigrationsschritt zum Migrieren der Leistungsinformation der Migrationsquellen-IT-Ressource aus dem ersten Überwachungssystem in das zweite Überwachungssystem.

10. Überwachungsunterstützungsprogramm nach Anspruch 9, wobei das Überwachungsunterstützungsprogramm bewirkt, dass der Computer ferner folgenden Schritt ausführt: einen Vorfallsinformationsmigrationsschritt zum Teilen von Vorfallsinformationen in Bezug auf die Migrationsquellen-IT-Ressource mit einem ersten Vorfallsverwaltungssystem, das Vorfälle in der Migrationsquellen-IT-Ressource verwaltet, und einem zweiten Vorfallsverwaltungssystem in der Migrationsziel-IT-Ressource.

11. Überwachungsunterstützungsprogramm nach Anspruch 10, wobei der
Überwachungskonfigurationsmigrationsschritt und der Leistungsinformationsmigrationsschritt die Überwachungskonfiguration bzw. die Leistungsinformation der Migrationsquellen-IT-Ressource bewegen, um die Überwachungskonfiguration bzw. die Leistungsinformation zu migrieren, und
wobei der Vorfallsinformationsmigrationsschritt die Migrationsquellenvorfallsinformationen kopiert, um die Migrationsquellenvorfallsinformationen mit dem ersten und dem zweiten Vorfallsverwaltungssystem zu teilen.

## Revendications

1. Système de support de surveillance pour supporter la surveillance de la migration d'une ressource de technologie de l'information (IT), le système de support de surveillance comprenant :
la ressource IT appartient à un locataire, dans lequel le locataire est fourni dans plusieurs centres de données différents,
une partie de commande de virtualisation pour migrer la ressource IT depuis un premier système de surveillance qui est fourni dans un premier centre de données des différents centres de données en tant que source de migration vers un second système de surveillance qui est fourni dans un second centre de données des différents centres de données en tant que destination de migration ;
une partie de mise à jour de table de gestion de ressource IT pour mettre à jour la ressource IT source de migration stockée dans une table de ressources IT dans laquelle la ressource IT source de migration ou la ressource IT destination de migration est associée au serveur physique auquel appartient la ressource IT ;
une partie de migration de configuration de surveillance pour migrer la configuration de surveillance de la ressource IT source de migration du premier système de surveillance au second système de surveillance ; et
une partie de migration d'informations de performance pour migrer les informations de performance de la ressource IT source de migration du premier système de surveillance au second système de surveillance.

2. Système de support de surveillance selon la revendication 1, comprenant en outre une partie de migration d'informations d'incident pour partager les informations d'incident relatives à la ressource IT source de migration entre un premier système de gestion d'incidents qui gère des incidents dans la ressource IT source de migration et un second système de gestion d'incidents dans la ressource IT destination de migration.

3. Système de support de surveillance selon la revendication 2,
dans lequel la partie de migration de configuration de surveillance et la partie de migration d'informations de performance déplacent la configuration de surveillance et les informations de performance de la ressource IT source de migration, respectivement, pour migrer la configuration de surveillance et les informations de performance, et
dans lequel la partie de migration d'informations d'incident copie les informations d'incident de source de migration pour partager les informations d'incident de source de migration entre les premier et second systèmes de gestion d'incidents.

4. Système de support de surveillance selon la revendication 2, le système de support de surveillance comprenant :
un premier centre de données comprenant la partie de commande de virtualisation, la partie de mise à jour de table de gestion des ressources IT, la partie de migration de configuration de surveillance et la partie de migration d'informations de performance ; et
un second centre de données comprenant la partie de migration d'informations d'incident,
dans lequel la partie de commande de virtualisation, la partie de migration de configuration de surveillance et la partie de migration d'informations de performance migrent la ressource IT et la configuration de surveillance, du premier centre de données en tant que source de migration vers le premier centre de données en tant que destination de migration, respectivement, et
dans lequel la partie de gestion d'incidents copie les informations d'incident provenant du second centre de données en tant que source de migration vers le second centre de données en tant que destination de migration.

5. Système de support de surveillance selon la revendication 2,
dans lequel la partie de migration de configuration de surveillance, ou la partie de migration d'informations de performance, ou la partie de migration d'informations d'incident migre la configuration de surveillance ou les informations de performance ou les informations d'incident en tirant parti de la migration de la ressource IT, respectivement.

6. Procédé de support de surveillance pour supporter la surveillance de la migration d'une ressource IT qui appartient à un locataire, dans lequel le locataire est fourni dans plusieurs centres de données différents, le procédé de support de surveillance comprenant :
une étape de migration pour migrer la ressource IT depuis un premier système de surveillance qui est fourni dans un premier centre de données des différents centres de données en tant que source de migration vers un second système de surveillance qui est fourni dans un second centre de données en tant que destination de migration ;
une étape de mise à jour pour mettre à jour la ressource IT source de migration stockée dans une table de ressources IT dans laquelle la ressource IT source de migration ou la ressource IT destination de migration est associée au serveur physique auquel appartient la ressource IT ;
une étape de migration de configuration de surveillance pour migrer la configuration de surveillance de la ressource IT source de migration du premier système de surveillance vers le second système de surveillance ; et une étape de migration d'informations de performance pour la migration des informations de performance de la ressource IT source de migration du premier système de surveillance vers le second système de surveillance.

7. Procédé de support de surveillance selon la revendication 6, comprenant en outre une étape de migration d'informations d'incident pour partager les informations d'incident relatives à la ressource IT source de migration, entre un premier système de gestion d'incidents qui gère des incidents dans la ressource IT source de migration, et un système de gestion d'incidents dans la ressource IT destination de la migration.

8. Procédé de support de surveillance selon la revendication 7,
dans lequel l'étape de migration de configuration de surveillance et la partie de migration d'informations de performance déplacent la configuration de surveillance et les informations de performance de la ressource IT source de migration, respectivement, pour migrer la configuration de surveillance et les informations de performance, et
dans lequel l'étape de migration d'informations d'incident copie les informations d'incident de source de migration pour partager les informations d'incident de source de migration entre les premier et second systèmes de gestion d'incidents.

9. Programme de support de surveillance,
dans lequel le programme de support de surveillance amène un ordinateur à exécuter :
une étape de migration pour migrer une ressource IT appartenant à un locataire, dans lequel le locataire est fourni dans plusieurs centres de données différents, d'un premier système de surveillance qui est fourni dans un premier centre de données des différents centres de données en tant que source de migration vers un second système de surveillance fourni dans un second centre de données des différents centres de données en tant que destination de migration ;
une étape de mise à jour de table pour mettre à jour la ressource IT source de migration stockée dans une table de ressources IT dans laquelle la ressource IT source de migration ou la ressource IT destination de migration est associée au serveur physique auquel appartient la ressource IT ;
une étape de migration de configuration de surveillance pour migrer la configuration de surveillance de la ressource IT source de migration du premier système de surveillance vers le second système de surveillance ; et une étape de migration d'informations de performance pour la migration des informations de performance de la ressource IT source de migration du premier système de surveillance vers le second système de surveillance.

10. Programme de support de surveillance selon la revendication 9,
dans lequel le programme de support de surveillance amène l'ordinateur à exécuter en outre une étape de migration d'informations d'incident pour partager les informations d'incident relatives à la ressource IT source de migration, entre un premier système de gestion d'incidents gérant des incidents dans la ressource IT source de migration, et un second système de gestion d'incidents dans la ressource IT destination de migration.

11. Programme de support de surveillance selon la revendication 10,
dans lequel l'étape de migration de configuration de surveillance et l'étape de migration d'informations de performance déplacent la configuration de surveillance et les informations de performance de la ressource IT source de migration, respectivement, pour migrer la configuration de surveillance et les informations de performance, et
dans lequel l'étape de migration d'informations d'incident copie les informations d'incident de source de migration pour partager les informations d'incident de source de migration entre les premier et second systèmes de gestion d'incidents.
